**Europäisches Patentamt**

(19) **European Patent Office**

**Office européen des brevets**

(11) Veröffentlichungsnummer: **0 073 412**
**A2**

(12) # EUROPÄISCHE PATENTANMELDUNG

(21) Anmeldenummer: **82107507.4**

(22) Anmeldetag: **18.08.82**

(51) Int. Cl.³: **C 08 F 299/02**, C 09 D 5/40, C 09 D 3/48

(30) Priorität: **26.08.81 DE 3133770**

(43) Veröffentlichungstag der Anmeldung: **09.03.83** Patentblatt **83/10**

(84) Benannte Vertragsstaaten: **AT BE DE FR GB IT NL**

(71) Anmelder: **BASF Aktiengesellschaft, Carl-Bosch-Strasse 38, D-6700 Ludwigshafen (DE)**

(72) Erfinder: **Gimpel, Juergen, Dr., Osloer Weg 44, D-6700 Ludwigshafen (DE)**
Erfinder: **Schwendemann, Volker, Dr., Hauptstrasse 64 A, D-6901 Wiesenbach (DE)**
Erfinder: **Schenck, Hans-Uwe, Dr., Erlenweg 6, D-6706 Wachenheim (DE)**
Erfinder: **Gulbins, Erich, Dr., Ladenburger Strasse 80, D-6900 Heidelberg (DE)**

(54) **Verkappte Isocyanatgruppen enthaltende Lackbindemittel und ihre Verwendung für die kathodische Elektrotauchlackierung.**

(57) Die Erfindung betrifft Lackbindemittel auf Basis eines tertiäre Aminogruppen, verkappte Isocyanatgruppen, Hydroxyl- und Ethergruppen enthaltenden Copolymerisats, das durch zumindest teilweise Salzbildung mit einer Säure wasserlöslich oder wasserdispergierbar ist.

Das Copolymerisat enthält einpolymerisiert eine olefinisch ungesättigte Verbindung, die eine tertiäre Aminogruppe enthält, ein mit einem CH-, OH- oder NH-aciden Verkappungsmittel verkapptes N-(1-alkenyl)-isocyanat, ein Addukt aus einem Epoxidharz auf der Basis von Bisphenol A und Epichlorhydrin mit einem Molekulargewicht zwischen 380 und 3500 und einem olefinisch ungesättigten Alkohol mit 3 bis 20 Kohlenstoffatomen sowie einer olefinisch ungesättigten Carbonsäure mit 3 bis 20 Kohlenstoffatomen, sowie gegebenenfalls eine oder mehrere weitere copolymerisierbare olefinisch ungesättigte Verbindungen, und weist ein mittleres Molekulargewicht zwischen 1000 und 20 000 auf.

Das erfindungsgemäße Lackbindemittel eignet sich als selbstvernetzendes und fremdvernetzendes Bindemittel für die kathodische Elektrotauchlackierung metallischer Gegenstände.

BASF Aktiengesellschaft                    O.Z. 0050/035373

Verkappte Isocyanatgruppen enthaltende Lackbindemittel und
ihre Verwendung für die kathodische Elektrotauchlackierung
─────────────────────────────────────────────────────────

Die vorliegende Erfindung betrifft Lackbindemittel auf Basis
tertiäre Aminogruppen, verkappte Isocyanatgruppen, Hydroxyl-
und Ethergruppen enthaltender Copolymerisate und deren Verwendung für die Elektrotauchlackierung.

Bindemittel aus Acrylatharzen, die durch Isocyanate vernetzt
werden, sind für die Elektrotauchlackierung bekannt. So beschreibt die US-PS 3 883 483 eine kathodisch abscheidbare
Polymerzusammensetzung, die das Umsetzungsprodukt eines halbseitig verkappten Diisocyanats mit einer ethylenisch ungesättigten Hydroxylverbindung wie Hydroxyethylacrylat enthält. Auf diese Weise ist jedoch die für die Vernetzung erforderliche Isocyanatgruppe über eine Esterbindung an die
Kohlenstoffkette des Polymers gebunden. Ein Teil der Esterbindungen wird durch Hydrolyse bei der Badalterung des
Elektrotauchlacks gespalten. Dadurch wird die Zusammensetzung der für die Vernetzung erforderlichen Bestandteile
im Laufe der Badalterung geändert. Dies führt zu einer Verschlechterung der chemischen Beständigkeit und des Korrosionsschutzes der abgeschiedenen Lacke.

Die US-PS 3 976 615 beschreibt Bindemittel für Elektrotauchlacke auf der Basis von Polyethern, die 1,2 bis 2 ungesättigte Ethergruppen pro Molekül enthalten und mit ungesättigten
Monomeren, die Aminogruppen enthalten, z.B. mit Dimethylaminoethylmethacrylat, copolymerisiert werden. Als Vernetzer werden N-Alkoxymethyl(meth)acrylamide, Phenoplaste
oder Aminoplaste genannt. Durch diese Vernetzer werden die
Elektrotauchbäder jedoch sehr spannungsempfindlich. Wird auf
diese Vernetzer verzichtet, sind die Beständigkeit gegenüber
Chemikalien und die mechanischen Eigenschaften der Lacküberzüge nicht mehr ausreichend.
Ls/P In der deutschen Patentanmeldung P 3 017 603.5 werden Bindemittel für Elektrotauchlacke beschrieben, die verkappte
N-(1-alkenyl)-isocyanate und allylmodifizierte Polyether als
Comonomere enthalten. Die Badstabilität dieser Elektrotauchlacke ist jedoch im pigmentierten Zustand nicht immer
gewährleistet.

Der vorliegenden Erfindung lag die Aufgabe zugrunde, Lackbindemittel für Elektrotauchlacke aufzuzeigen, die Überzüge
mit gutem Korrosionsschutz ergeben und deren Bäder auch im
pigmentierten Zustand ausreichende Badstabilität aufweisen.

Diese Bindemittel sollen für die Vernetzungsreaktion eine
definierte Menge an verkappten Isocyanatgruppen enthalten,
die direkt an die Kohlenstoffkette des Polymers gebunden
sind, wobei im Polymermolekül gegebenenfalls noch andere
reaktive Gruppen enthalten sein können, so daß die Polymere
als selbst- und fremdvernetzende Bindemittel eingesetzt werden können.

Es wurde gefunden, daß sich Copolymerisate herstellen lassen,
die neben dem verkappten N-(1-alkenyl)-isocyanat modifizierte Epoxidharze auf Basis Bisphenol A einpolymerisiert
enthalten, wobei ein Teil der Epoxidgruppen mit einem olefinisch ungesättigten Alkohol, vorzugsweise einem Allylgruppen enthaltenden Alkohol verethert und der Rest der
Epoxidgruppen mit olefinisch ungesättigten Carbonsäuren ver-
estert ist. Überraschenderweise erhält man mit derartig modifizierten Epoxidharzen unvernetzte Copolymere.

Gegenstand der vorliegenden Erfindung ist ein Lackbindemittel auf Basis eines tertiäre Aminogruppen, verkappte
Isocyanatgruppen, Hydroxyl- und Ethergruppen enthaltenden
Copolymerisats, das durch zumindest teilweise Salzbildung
mit einer Säure wasserlöslich oder wasserdispergierbar ist, das dadurch gekennzeichnet ist, daß das Copolymerisat einpolymerisiert enthält:

(A) 6 bis 22 Gew.-% mindestens einer olefinisch ungesättigten Verbindung, die eine tertiäre Aminogruppe enthält,

(B) 10 bis 35 Gew.-% eines mit einem CH-, OH- oder NH-aciden Verkappungsmittel verkappten N-(1-alkenyl)-isocyanats,

(C) 20 bis 70 Gew.-% eines Addukts aus einem Epoxidharz auf der Basis von Bisphenol A und Epichlorhydrin mit einem Molekulargewicht zwischen 380 und 3500 und (a) einem olefinisch ungesättigten Alkohol mit 3 bis 20 Kohlenstoffatomen sowie (b) einer olefinisch ungesättigten Carbonsäure mit 3 bis 20 Kohlenstoffatomen,

(D) 0 bis 64 Gew.-% einer oder mehrerer unter (A) bis (C) nicht genannter copolymerisierbarer olefinisch ungesättigter Verbindungen,

mit der Maßgabe, daß das Copolymerisat ein mittleres Molekulargewicht zwischen 1 000 und 20 000 aufweist und die Summe der unter (A) bis (D) genannten Prozentzahlen 100 ist.

Gegenstand der vorliegenden Erfindung ist außerdem die Verwendung dieser Lackbindemittel als selbstvernetzende Bindemittel oder in Kombination mit einem polyfunktionellen Vernetzungsmittel als fremdvernetzendes Bindemittel für die kathodische Elektrotauchlackierung metallischer Gegenstände.

Der daraus hergestellte Elektrotauchlack enthält im allgemeinen 5 bis 20 Gew.-% des protonierten erfindungsgemäßen Copolymerisats.

Zu den Aufbaukomponenten des erfindungsgemäßen Lackbindemittels ist im einzelnen folgendes auszuführen:

(A) Als Komponente (A) kommen übliche ethylenisch ungesättigte Verbindungen mit einer tertiären Aminogruppe in Betracht, wie tertiäre Amino(meth)acrylester z.B. Dialkylaminoalkyl(meth)-acrylate mit 1 bis 8, vorzugsweise 1 bis 4 Kohlenstoffatomen in den Alkylgruppen, z.B. N,N-Dimethylaminoethylmethacrylat, N,N-Diethylaminoethylacrylat, oder tertiäre Amino(meth)acrylamide, mit 1 bis 8, vorzugsweise 1 bis 4 Kohlenstoffatomen in den Alkylgruppen, wie N,N-Dimethylaminopropyl(meth)acrylamid und N,N-Diethylaminopropyl(meth)acrylamid.

Komponente (A) ist im erfindungsgemäßen Lackbindemittel in Mengen von 6 bis 22, vorzugsweise 6 bis 15, insbesondere 8 bis 13 Gew.-% einpolymerisiert, wobei Amino(meth)acrylamide besonders bevorzugt sind.

(B) Die Komponente (B) ist ein Addukt aus einem N-(1-alkenyl)-isocyanat und einem CH-, OH- oder NH-aciden Verkappungsmittel. Geeignete N-(1-alkenyl)-isocyanate sind solche mit 2 bis 4 Kohlenstoffatomen in der Alkenylgruppe, vorzugsweise Vinylisocyanat und/oder Propenylisocyanat. Als Verkappungsmittel zur Herstellung der Komponente (B) können beispielsweise Monophenole wie Phenol, Kresol, Trimethylphenol, primäre Alkohole oder sekundäre Alkohole wie Isopropanol oder Cyclohexanol, tertiäre Alkohole, wie t-Butanol, t-Amylalkohol, leicht enolisierbare Verbindungen, wie Acetessigester, Acetylaceton, Malonsäurederivate, wie Malonsäurediester mit 1-8 Kohlenstoffatomen in der Alkoholkomponente, Malonsäuredinitril, sekundäre aromatische Amine, wie N-Methylanilin, N-Methyltoluidin, N-Phenyltoluidin, Imide, wie Succinimid oder Phthalimid, Lactame wie $\epsilon$-Caprolactam, $\delta$-Valerolactam, Laurinlactam sowie Oxime, wie Acetonoxim, Butanonoxim und Cyclohexanonoxim sowie aromatische Triazole, wie Triazabenzol eingesetzt wer-

0073412

den. Besonders bevorzugt als Verkappungsmittel der N-(1-alkenyl)-isocyanate sind t-Butanol, Cyclohexanol, Caprolactam und Methylethylketonoxim.

Die Herstellung des verkappten N-(1-alkenyl)-isocyanats, wie z.B. des Vinylisocyanats kann z.B. nach einer Analogievorschrift in Houben-Weyl, Methoden der organischen Chemie, Band 14/2, (1963) Seite 61-70 erfolgen. Sie wird vorzugsweise in Gegenwart von Lösungsmittel durchgeführt. Bei der Umsetzung des N-(1-alkenyl)-isocyanats (Vinylisocyanats) mit dem Verkappungsmittel werden etwa äquimolare Mengen eingesetzt. Ein Überschuß des Isocyanats ist zu vermeiden, da dies später zu Vernetzungen Anlaß geben könnte.

Komponente (B) ist in einer Menge von 10 bis 35, vorzugsweise 15 bis 25 Gew.-% im erfindungsgemäßen Copolymerisat einpolymerisiert.

(C) Die Komponente (C) ist ein Umsetzungsprodukt aus einem Epoxidharz aus Bisphenol A und Epichlorhydrin mit einem Molekulargewicht zwischen 380 und 3500 und (a) einem olefinisch ungesättigten Alkohol zum einen und (b) einer olefinisch ungesättigten Carbonsäure zum andern. Das Molekulargewicht des Epoxidharzes liegt vor der Umsetzung mit den Komponenten (a) und (b) vorzugsweise zwischen 380 und 1400.

(a) Als olefinisch ungesättigte Alkohole mit 3 bis 20 Kohlenstoffatomen (a) können beispielsweise verwendet werden: Allylalkohol, Geraniol, Buten-1-ol-3, Farnesol, Sojaalkohol, Leinölalkohol oder Alkanolallylether und Alkanolallylthioether mit 2 bis 6 Kohlenstoffatomen im Alkanolrest wie Allylhydroxypropylether und Hydroxyethylallylthioether, ferner

0073412

1-Alkenyl-$\omega$-ole mit 4 bis 20 Kohlenstoffatomen, wie Buten(1)-ol(4), Monoacryl- oder Methacrylester mit Diolen, wie 2-Hydroxyethylacrylat, 2-Hydroxypropyl-acrylat, Butandiolmonoacrylat, 2-Hydroxyethylmeth-acrylat, 2-Hydroxypropylmethacrylat oder Butandiol-monomethacrylat sowie ungesättigte Polyole, wie z.B. Vinylglykol. Bevorzugt als Komponente (a) ist Allylalkohol.

(b) Als olefinisch ungesättigte Carbonsäuren mit 3 bis 20 Kohlenstoffatomen (b) können beispielsweise ver-wendet werden copolymerisierbare $\alpha,\beta$-olefinisch ungesättigte Monocarbonsäuren wie Acrylsäure, Methacrylsäure, Crotonsäure sowie Halbester von $\alpha,\beta$-olefinisch ungesättigten Dicarbonsäuren wie Male-insäurehalbester, Itaconsäurehalbester, Citracon-säurehalbester, Mesaconsäurehalbester, wobei bei-spielsweise Halbester von C1- bis C20-, vorzugsweise C3- bis C8-Alkanolen in Frage kommen. Das Epoxidharz auf Basis Bisphenol A und Epichlorhydrin ist im allgemeinen zu 20 bis 90, vorzugsweise 40 bis 70 Mol% der Epoxidgruppen mit olefinisch ungesättigten, vorzugsweise eine Allylgruppe enthaltenden Alkohol verethert und zu 10 bis 80, vorzugsweise 60 bis 30 Mol% der Epoxidgruppen mit einer olefinisch ungesättigten Monocarbonsäure verestert.

Besonders bevorzugt ist das Umsetzungsprodukt eines Epoxidharzes mit dem mittleren Molekulargewicht von etwa 900 und 40 bis 60 Mol% Allylalkohol oder Buten-1-ol-3 und 40 bis 60 Mol% Acrylsäure oder Methacrylsäure.

Komponente (C) ist im erfindungsgemäßen Copolymerisat in einer Menge von 20 bis 70, vorzugsweise 35 bis 60 Gew.-% einpolymerisiert.

(D) Als Komponente (D) kommen andere unter (A) bis (C) nicht genannte copolymerisierbare olefinisch ungesättigte Verbindungen in Betracht, wie Ester der Acryl- und Methacrylsäure mit Monoalkoholen, die 1-18, vorzugsweise 1-8 Kohlenstoffatome aufweisen, z.B. Methylacrylat, Ethylacrylat, Butylacrylat, 2-Ethylhexylacrylat und Methylmethacrylat. Des weiteren kommen alle anderen copolymerisierbaren ungesättigten Verbindungen in Frage, insbesondere Vinylester von Carbonsäuren mit 2 bis 10 Kohlenstoffatomen, wie Vinylacetat, Vinylpropionat und Vinylpivalat, Vinylaromaten, wie z.B. Styrol, Acrylnitril und olefinisch ungesättigte Triglyceride, wie isomerisiertes Leinöl sowie Gemische der genannten Monomeren.

Komponente (D) ist im erfindungsgemäßen Copolymerisat in einer Menge von 0 bis 64, vorzugsweise 2 bis 42 Gew.-% einpolymerisiert.

Die Herstellung der erfindungsgemäßen Copolymeren erfolgt zweckmäßigerweise in polaren, keine OH-Gruppen aufweisenden Lösungsmitteln, wie z.B. Ethern, wie Tetrahydrofuran oder Estern, wie Essigester oder n-Butylacetat, in Gegenwart radikalbildender Initiatoren, wie Azobiscarbonsäureamiden, Azobiscarbonsäurenitrilen oder Peroxiden im allgemeinen bei Temperaturen zwischen 50 und 120$^\circ$C, vorzugsweise zwischen 60 und 90$^\circ$C, gegebenenfalls in Gegenwart von Reglern, wie Mercaptoethanol, t-Dodecylmercaptan oder Diisopropylxanthogendisulfid.

Beispiele für besonders bevorzugte Lackbindemittel sind Copolymerisate aus 8 bis 13 Gew.-% N,N-Dimethylaminopropyl(meth)acrylamid, 15 bis 25 Gew.-% mit Caprolactam oder Methylethylketonoxim verkapptem Vinylisocyanat, 35 bis 60 Gew.-% eines Umsetzungsproduktes aus einem Epoxidharz aus Bisphenol A und Epichlorhydrin mit einem mittleren Molekulargewicht von 900 und einem Gemisch aus Allylalkohol und Acrylsäure und 2 bis 42 Gew.-% 2-Ethylhexylacrylat.

Die erfindungsgemäßen Copolymerisate sind unvernetzte Produkte mit einem mittleren Molekulargewicht zwischen 1 000 und 20 000, vorzugsweise zwischen 2 000 und 10 000 (gemessen mit dem Dampfdruckosmometer). Die K-Werte (nach Fikentscher) (3%ig in Eisessig) liegen dementsprechend zwischen etwa 15 und 35, vorzugsweise zwischen 18 und 24.

Die Copolymerisate können nach ihrer Herstellung noch quaterniert werden. Dazu werden sie in Gegenwart von Säure mit Epoxiden wie Ethylenoxid, Propylenoxid, Butylenoxid oder Glycid umgesetzt oder mit Alkylierungsmitteln wie Methyljodid oder Dimethylsulfoxid behandelt.

Die erfindungsgemäßen Copolymerisate enthalten tertiäre Aminogruppen, gegebenenfalls quaternäre Ammoniumgruppen, verkappte Isocyanatgruppen und gegebenenfalls gegenüber Isocyanatgruppen reaktionsfähige Strukturen, sowie C-C-Doppelbindungen, die beim Einbrennen der Lacküberzüge mit zur Vernetzung beitragen.

Diese Copolymerisate werden erfindungsgemäß als Lackbindemittel verwendet und sind durch zumindest teilweise Salzbildung mit Säuren wasserlöslich bzw. wasserdispergierbar.

Die Copolymerisate werden dazu zumindest teilweise mit Säuren neutralisiert. Als Neutralisationsmittel können organische und anorganische Säuren dienen. Bevorzugt sind Essigsäure, Milchsäure und Gluconsäure. Der Neutralisationsgrad für die Anwendung der erfindungsgemäßen Lackbindemittel in wäßrigem Medium liegt zwischen 10 und 120 %.

0073412

Außer dem erfindungsgemäßen Bindemittel kann der Lack polyfunktionelle Vernetzungsmittel, wie hydroxylgruppenhaltige Polymere, Polyester oder Polyadditionsverbindungen, wie z.B. Aminoplaste oder Phenol-Formaldehyd-Harze, sowie Pigmente wie z.B. Titandioxid, Talkum und Ruß je nach Anwendungszweck in Mengen von 10 bis 80, vorzugsweise 20 bis 65 Gewichtsteilen, bezogen auf 100 Gewichtsteile Bindemittel enthalten. Darüber hinaus können anorganische und organische Buntpigmente in Mengen von bis zu 5 Gewichtsteilen sowie Füllstoffe in Mengen von ebenfalls bis zu 5 Gewichtsteilen enthalten sein. Verlaufsmittel können bis zu 10 Teilen, Wachse zur Erhöhung der Kratzfestigkeit bis zu 10 Teilen und Katalysatoren für die Entkappungsreaktion wie z.B. Dibutylzinndilaurat in Mengen von bis zu 2 Teilen, jeweils bezogen auf 100 Teile Bindemittel vorhanden sein.

Die erfindungsgemäßen Lackbindemittel werden insbesondere für die kathodische Elektrotauchlackierung verwendet, und zwar als selbstvernetzende Bindemittel oder auch als fremdvernetzende Bindemittel.

Mit den erfindungsgemäßen Elektrotauchlacken lassen sich vor allem metallische Gegenstände, z.B. aus Eisen, Stahl und Aluminium beschichten.

Die Herstellung der kationischen Elektrotauchbäder erfolgt wie üblich, beispielsweise wie in W. Machu, Elektrotauchlackierung (1974) S. 155 ff beschrieben. Der Feststoffgehalt der Elektrotauchbäder liegt im allgemeinen zwischen 5 und 25 Gew.-%, der pH-Wert zwischen 4,0 und 7,5.

Die mit dem erfindungsgemäßen Bindemittel erhaltenen Überzüge weisen eine hohe Härte auf, sind sehr elastisch, chemikalienbeständig und besitzen einen guten Korrosionsschutz. Dieses hohe Eigenschaftsniveau der Lacke wird durch die

0073412

Badalterung nicht negativ beeinflußt. Insbesondere weisen die erfindungsgemäßen Lackbindemittel auch im pigmentierten Zustand eine sehr gute Badstabilität auf.

Die in den Beispielen genannten Teile und Prozente sind, soweit nicht anders angegeben, Gewichtsteile bzw. Gewichtsprozente.

Herstellung der Komponente (B)

(B 1)   N-Vinylcarbaminsäure-tert.-Butylester

In einem Reaktionsgefäß, versehen mit einem Intensivkühler (mit Kühlsohle), Rührer, Thermometer und Zulaufgefäß werden 69 Teile Vinylisocyanat und 70 Teile Ethylacetat vorgelegt. Bei 40°C werden innerhalb von 1 Std. 74 Teile tert.-Butanol, 73 Teile Ethylacetat und 0,01 % Dibutylzinndilaurat zugegeben. Anschließend läßt man noch 10 Stunden bei 40°C nachreagieren. Es entsteht eine hellgelbe klare Lösung. Isocyanatgehalt (verkappt): 14,7 %.

(B 2)   N-Vinylcarbaminsäure-cyclohexylester

In einem Reaktionsgefäß werden 69 Teile Vinylisocyanat und 89,5 Teile Ethylacetat vorgelegt und auf 40°C aufgeheizt. Dazu wird innerhalb von 1 Stunde eine Mischung aus 110 Teilen Cyclohexanol und 89,5 Teilen Ethylacetat (0,02 % Dibutylzinndilaurat als Katalysator) gegeben. Nachreaktionszeit: 2 Stunden bei 40°C. Man erhält eine hellgelbe Lösung, aus der sich beim Abkühlen das Reaktionsprodukt in Form von Kristallen abscheidet. Isocya- nat-Gehalt (verkappt): 11,7 %.

(B 3)   N(N'-Vinyl-carbamoyl)caprolactam

In einem Reaktionsgefäß werden 113 Teile $\varepsilon$-Caprolactam und 91 Teile Ethylacetat (+ 0,015 % Dibutylzinndilaurat) vorgelegt und auf ca. 50°C aufgeheizt. Dazu wird innerhalb von 1 Std. eine Mischung aus 69 Teilen Vinylisocyanat und 91 Teilen Ethylacetat zugetropft. Nachreaktionszeit: 5 Std.. Man erhält eine hellgelbe klare Lösung. Isocyanat-Gehalt (verkappt): 11,5 %.

## Herstellung der Komponente (C)

(C 1) (für Vergleichspolymer)

250 Teile eines Epoxidharzes aus Bisphenol A und Epichlorhydrin mit einem mittleren Molekulargewicht von 900 und einem Epoxidwert von 0,2 bis 0,223 und 400 Teile Allylalkohol werden zusammen auf 80°C erhitzt bis eine homogene Lösung entsteht.

Man gibt 1,75 Teile Bortrifluorid-Diethyletheratlösung hinzu, 75 Teile Allylalkohol und 0,1 Teile Hydrochinonmonomethylether. Nach 2-stündigem Erhitzen auf Rückflußtemperatur wird der überschüssige Allylalkohol abdestilliert und das Produkt in Ethylacetat aufgenommen. Man erhält eine gelbliche klare Lösung mit einem Epoxidwert von 0,00 und einem Feststoffgehalt von 61 %.

(C 2)   200 Teile Allylalkohol, 62,1 Teile Acrylsäure, 1,25 Teile Bortrifluorid-Diethyletheratlösung und 2,41 Teile Hydrochinon werden unter Stickstoff auf 90°C erhitzt. Zulauf 1, bestehend aus 2 154,75 Teilen eines Epoxidharzes aus Bisphenol A und Epichlorhydrin mit einem mittleren Molekulargewicht von 900 und einem Epoxidwert von 0,2 bis 0,223, gelöst in 718,25 Teilen Methylethylketon, und Zulauf 2, bestehend aus 1,25 Teilen Bortrifluorid-Diethyletheratlösung in 100 Teilen Methylethylketon, werden gleichzeitig in 2,5 Stunden bei 90°C zudosiert. Die Temperatur wird noch 1 Stunde bei 90°C gehalten, anschließend wird gekühlt. Man erhält eine gelblich klare Lösung mit einem Epoxidwert von 0,00 und einem Feststoffgehalt von 74,8 %.

(C 3) 150 Teile Allylalkohol, 124,1 Teile Acrylsäure, 1,25 Teile Bortrifluorid-Diethyletheratlösung und 2,42 Teile Hydrochinon werden unter Stickstoff auf 90°C erhitzt. Zulauf 1, bestehend aus 2 154,75 Teilen des Epoxidharzes von C 2 und 718,25 Teilen Methylethylketon, und Zulauf 2, bestehend aus 1,25 Teilen Bortrifluorid-Diethyletheratlösung und 100 Teilen Methylethylketon werden gleichzeitig in 2,5 Stunden bei 90°C zudosiert. Die Temperatur wird noch 1 Stunde bei 90°C gehalten, dann wird gekühlt. Man erhält eine gelblich klare Lösung mit einem Epoxidwert von 0,00 und einem Feststoffgehalt von 73,4 %.

(C 4) 125 Teile Allylalkohol, 155,2 Teile Acrylsäure, 1,25 Teile Bortrifluorid-Diethyletheratlösung und 2,42 Teile Hydrochinon werden unter Stickstoff auf 90°C erhitzt. Zulauf 1, bestehend aus 2 155,2 Teilen des Epoxidharzes von C 2 und 1 436,8 Teilen Methylethylketon, und Zulauf 2, bestehend aus 1,25 Teilen Bortrifluorid-Diethyletheratlösung und 100 Teilen Methylethylketon werden gleichzeitig in 2,5 Stunden bei 90°C zudosiert. Nach einer weiteren Stunde bei 90°C wird die erhaltene gelblich klare Lösung auf Zimmertemperatur abgekühlt. Sie hat einen Epoxidwert von 0,00 und einen Feststoffgehalt von 62,7 %.

(C 5) 87,5 Teile Allylalkohol, 201,76 Teile Acrylsäure, 1,25 Teile Bortrifluorid-Diethyletheratlösung und 2,42 Teile Hydrochinon werden unter Stickstoff auf

90°C erhitzt. Zulauf 1 bestehend aus 2 155,2 Teilen des bei (C 2) genannten Epoxidharzes und 1 436,8 Teile Methylethylketon, und Zulauf 2, bestehend aus 1,25 Teilen Bortrifluorid-Diethyletheratlösung und 100 Teilen Methylethylketon wurden gleichzeitig in 2,5 Stunden bei 90°C zudosiert. Nach einer weiteren Stunde bei 90°C wird die erhaltene gelblich klare Lösung auf Zimmertemperatur abgekühlt. Sie hat einen Epoxidwert von 0,00 und einen Feststoffgehalt von 59,6 %.

(C 6)   50 Teile Allylalkohol, 248,3 Teile Acrylsäure, 1,25 Teile Bortrifluorid-Diethyletheratlösung und 2,42 Teile Hydrochinon werden unter Stickstoff auf 90°C erhitzt. Zulauf 1 und 2, wie bei (C 5) zusammengesetzt, werden in 2,5 Stunden bei 90°C zudosiert. Nach einer weiteren Stunde bei 90°C wird die erhaltene gelblich klare Lösung auf Zimmertemperatur abgekühlt. Sie hat einen Epoxidwert von 0,00 und einen Feststoffgehalt von 59,2 %.

Herstellung der Copolymerisatlösungen
Polymer 1 (Vergleichspolymer)

In einem mit Rührer, Rückflußkühler und Innenthermometer ausgestatteten Reaktionsgefäß werden 30 % des Zulaufs vorgelegt. Der Zulauf besteht aus 400 Teilen des Addukts (B 3), 819 Teilen der Komponente (C 1), 60 Teilen Dimethylaminopropylmethacrylamid, 240 Teile 2-Ethylhexylacrylat, 12 Teilen t-Dodecylmerkaptan, 20 Teilen Azobisisobutyronitril und 48 Teilen Essigsäureethylester. Die Vorlage wird unter Stickstoff auf 80°C aufgeheizt. Der Zulauf wird in 3 Stunden bei 80°C zugefahren. Es wird eine Stunde nachpolymerisiert, 5 Teile Azobisisobutyronitril hinzugegeben und noch 1 Stunde bei 80°C nachpolymerisiert. Man erhält eine klare Lösung eines Harzes mit dem K-Wert von 18,3 und dem Feststoffgehalt von 59,5 %.

Erfindungsgemäße Polymere

Polymer 2

Wie bei Polymer 1 beschrieben, wird eine Polymerlösung aus 400 Teilen des Addukts (B 3), 817,4 Teilen der Komponente (C 3), 60 Teilen Dimethylaminopropylmethacrylamid, 140 Teilen 2-Ethylhexylacrylat, 5 Teilen t-Dodecylmerkaptan, 20 Teilen Azobisisobutyronitril und 249 Teilen Essigsäureethylester hergestellt. Man erhält eine klare Lösung eines Harzes mit einem K-Wert von 22,4 und dem Feststoffgehalt von 59,8 %.

Polymer 3

Wie bei Polymer 1 beschrieben, wird eine Polymerlösung aus 400 Teilen des Addukts (B 3), 801 Teilen der Komponente (C 4), 120 Teilen Dimethylaminopropylmethacrylamid, 180 Teilen 2-Ethylhexylacrylat, 7 Teilen t-Dodecylmerkaptan, 20 Teilen Azobisisobutyronitril und 166 Teilen Essigsäureethylester, hergestellt. Man erhält eine klare Lösung eines Harzes vom K-Wert 22,7 und mit einem Feststoffgehalt von 58,8 %.

Polymer 4

Wie bei Polymer 1 beschrieben, wird eine Polymerlösung aus 400 Teilen des Addukts (B 3), 798 Teilen der Komponente (C 4), 90 Teilen Dimethylaminopropylmethacrylamid, 210 Teilen 2-Ethylhexylacrylat, 8 Teilen t-Dodecylmerkaptan, 20 Teilen Azobisisobutyronitril und 169 Teilen Essigsäureethylester hergestellt. Man erhält eine klare Lösung eines Harzes mit dem K-Wert von 19,9 und einem Feststoffgehalt von 59,3 %.

Vergleichsbeispiel
Elektrotauchlack 1

126 Teile der Lösung des Polymeren 1, (59,5%ig) 45 Teile Titandioxid (z.B. Tioxide RTC90), 1,275 Teile Essigsäure, 8 Teile Isodekanol und 823 Teile Wasser werden mit Hilfe einer Kugelmühle zu einer Dispersion mit einem Feststoffgehalt von 12 Gew.-% verarbeitet.

Erfindungsgemäße Elektrotauchlacke
Elektrotauchlack 2

125 Teile der Lösung des Polymeren 2, (59,8%ig) 45 Teile Titandioxid, 1,275 Teile Essigsäure, 8 Teile Isodekanol und 823 Teile Wasser werden mit Hilfe einer Kugelmühle zu einer Dispersion mit einem Feststoffgehalt von 12 Gew.-% verarbeitet. Die Dispersion wird von der ersten Abscheidung 24 Stunden bei 30°C gerührt.

Elektrotauchlack 3

128 Teile der Lösung des Polymeren 3, (58,8%ig) 45 Teile Titandioxid, 1,875 Teile Essigsäure, 8 Teile Isodekanol und 820 Teile Wasser werden mit Hilfe einer Kugelmühle zu einer Dispersion mit einem Feststoffgehalt von 12 Gew.-% verarbeitet, die wie beschrieben bei 30°C ausgerührt wird.

Elektrotauchlack 4

127 Teile der Lösung des Polymeren 4, (59,3%ig) 45 Teile Titandioxid, 1,425 Teile Essigsäure, 9 Teile Isodekanol und 821 Teile Wasser werden mit Hilfe einer Kugelmühle zu einer Dispersion mit einem Feststoffgehalt von 12 Gew.-% verarbeitet, die wie beschrieben bei 30°C ausgerührt wird.

0073412

O.Z. 0050/035373

Mit diesen Elektrotauchlacken werden während einer Abscheidezeit von zwei Minuten zinkphosphatierte Bleche beschichtet, die anschließend bei 190°C 30 Minuten lang eingebrannt werden. Die Eigenschaften der Elektrotauchlacke und der beschichteten Bleche sind nachfolgender Tabelle zu entnehmen.

| Elektrotauchlack Nr. | 1 | 2 | 3 | 4 |
|---|---|---|---|---|
| Badstabilität 24 Std./30°C | nicht gegeben | io | io | io |
| pH-Wert | 4,5 | 4,9 | 6,1 | 5,5 |
| Abscheidespannung [V] | 150 | 180 | 100 | 110 |
| Schichtdicke [/um] | 20 | 21 | 20 | 19 |
| Pendelhärte [sec] (DIN 53157) | 175 | 178 | 176 | 175 |
| Erichsen-Tiefung [mm] (DIN 53156) | 5,5 | 5,5 | 6,0 | 6,3 |
| Gitterschnitt (DIN 53151) | GT1 | GT1 | GTO-1 | GTO-1 |
| Korrosionsschutz [Std/mm] (DIN 50021) | 200/5 | 200/4,5 | 200/2,5 | 200/3,1 |

0073412

Patentansprüche

1. Lackbindemittel auf Basis eines tertiäre Aminogruppen, verkappte Isocyanatgruppen, Hydroxyl- und Ethergruppen enthaltenden Copolymerisats, das durch zumindest teilweise Salzbildung mit einer Säure wasserlöslich oder wasserdispergierbar ist, dadurch gekennzeichnet, daß das Copolymerisat einpolymerisiert enthält:

(A) 6 bis 22 Gew.-% mindestens einer olefinisch ungesättigten Verbindung, die eine tertiäre Aminogruppe enthält,

(B) 10 bis 35 Gew.-% eines mit einem CH-, OH- oder NH-aciden Verkappungsmittel verkappten N-(1-alkenyl)-isocyanats,

(C) 20 bis 70 Gew.-% eines Adduktes aus einem Epoxidharz auf der Basis von Bisphenol A und Epichlorhydrin mit einem Molekulargewicht zwischen 380 und 3500 und (a) einem olefinisch ungesättigten Alkohol mit 3 bis 20 Kohlenstoffatomen sowie (b) einer olefinisch ungesättigten Carbonsäure mit 3 bis 20 Kohlenstoffatomen,

(D) 0 bis 64 Gew.-% einer oder mehrerer unter (A) bis (C) nicht genannter copolymerisierbarer olefinisch ungesättigter Verbindungen,

mit der Maßgabe, daß das Copolymerisat ein mittleres Molekulargewicht zwischen 1 000 und 20 000 aufweist und die Summe der unter (A) bis (D) genannten Prozentzahlen 100 ist.

2. Lackbindemittel nach Anspruch 1, dadurch gekennzeichnet, daß als Komponente (B) ein Addukt aus Vinylisocyanat oder Propenylisocyanat und Cyclohexanol, t-Butanol, ε-Caprolactam oder Methylethylketonoxim im Molverhält-

O.Z.0050/035373

0073412

nis Isocyanat/Verkappungsmittel von 1 : 1 verwendet wird.

3. Lackbindemittel nach Anspruch 1 oder 2, <u>dadurch gekennzeichnet</u>, daß das Äquivalentverhältnis der reaktiven Wasserstoffatome der Komponente (C) zu den verkappten Isocyanatgruppen der Komponente (B) etwa 1 : 1 beträgt.

4. Lackbindemittel nach einem der vorhergehenden Ansprüche, <u>dadurch gekennzeichnet</u>, daß als Komponente (C) ein Addukt aus einem Epoxidharz auf der Basis von Bisphenol A und Epichlorhydrin mit einem Molekulargewicht zwischen 380 und 3500 und (a) Allylalkohol oder Buten-1-ol-3 und (b) Acrylsäure oder Methacrylsäure verwendet wird.

5. Verwendung des Lackbindemittels nach einem der vorhergehenden Ansprüche als selbstvernetzendes Bindemittel für die kathodische Elektrotauchlackierung metallischer Gegenstände.

6. Verwendung des Lackbindemittels nach einem der Ansprüche 1 bis 4 in Kombination mit einem polyfunktionellen Vernetzungsmittel als fremdvernetzendes Bindemittel für die kathodische Elektrotauchlackierung metallischer Gegenstände.